# EUROPÄISCHE PATENTSCHRIFT

(11) **EP 3 916 440 B1**
(45) Veröffentlichungstag und Bekanntmachung des Hinweises auf die Patenterteilung: **07.08.2024**
(21) Anmeldenummer: 21179130.6
(22) Anmeldetag: 22.12.2011
(51) Int. Cl.: G02B 5/30, G02B 27/01, G02F 1/1335

(54) **HEAD-UP-DISPLAY FÜR EIN KRAFTFAHRZEUG**
HEAD-UP DISPLAY FOR A MOTOR VEHICLE
AFFICHAGE TÊTE HAUTE POUR UN VÉHICULE AUTOMOBILE

(30) Priorität: 23.12.2010 DE 102010055839; 16.03.2011 DE 102011014145
(43) Veröffentlichungstag der Anmeldung: 01.12.2021
(62) Teilanmeldung aus: 11805504.5
(73) Patentinhaber: Continental Automotive Technologies GmbH, 30175 Hannover (DE)
(72) Erfinder: Finger, Eckhard, 60488 Frankfurt am Main (DE)
(74) Vertreter: Continental Corporation

(56) Entgegenhaltungen:
- EP-A2- 1 126 292
- DE-A1- 102009 002 189
- JP-A- 2000 131 682
- US-A1- 2004 008 412
- US-A1- 2004 135 742
- US-A1- 2005 162 738

## Beschreibung

Die Erfindung bezieht sich auf ein Head-up-Display für ein Kraftfahrzeug, mit einer Bilderzeugungseinrichtung, von der Strahlenbündel eines Bildes durch einen lichtausgangsseitig auf der Bilderzeugungseinrichtung angeordneten Polarisator linear polarisiert über eine Abbildungsoptik zu einer Windschutzscheibe geleitet und von der Windschutzscheibe in Richtung eines Fahrers des Kraftfahrzeugs gelenkt werden.

Bei einem derartigen Head-up-Display wird eine Darstellung von Informationen dem Fahrer des Kraftfahrzeugs von einem Projektionssystem in die Windschutzscheibe eingespiegelt.

Das Bild wird dabei von der Bilderzeugungseinrichtung erzeugt. Zum Betrachter abschließend befindet sich auf der Bilderzeugungseinrichtung eine absorbierende Polarisationsfolie. Dadurch ist das Licht der Bilderzeugungseinrichtung linear polarisiert. Diese Polarisierung steht senkrecht zur Ebene der Projektion.

Aufgrund der Lichtwege und der Reflektion des Strahlenbündels des Projektionsbildes an der Windschutzscheibe gibt es die Möglichkeit, dass die Sonne direkt in die Bilderzeugungseinrichtung einstrahlt. Aufgrund der Fokussierung der Abbildungsoptik wird eine erhebliche Wärmemenge in die Bilderzeugungseinrichtung eingebracht.

Um dies zu mindern ist es bekannt, einen Kaltlichtspiegel in dem Strahlengang des Strahlenbündels zwischen Bilderzeugungseinrichtung und Windschutzscheibe anzuordnen, der im infraroten Spektralbereich transparent oder absorbierend ist.

Trotzdem kann noch eine solche Lichtleistung auf die Bilderzeugungseinrichtung einstrahlen, dass diese auf Temperaturen erwärmt wird, die das erzeugte Bild stören.

Aus JP 2000 131682 A ist ein Head-Up-Display gemäß Oberbegriff des Anspruchs 1 bekannt.

Aufgabe der Erfindung ist es, ein Head-up-Display der genannten Art zu schaffen, das eine Sonneneinstrahlung in die Bilderzeugungseinrichtung wesentlich reduziert.

Diese Aufgabe wird erfindungsgemäß durch die im kennzeichnenden Teil des Anspruchs 1 angegebene Merkmalskombination gelöst.

Im Strahlengang des Strahlenbündels zwischen der Bilderzeugungseinrichtung und der Windschutzscheibe ist ein reflektierender Linear-Polarisator angeordnet, dessen Polarisationsrichtung der Polarisationsrichtung des von der Bilderzeugungseinrichtung ausgestrahlten Strahlenbündels entspricht und der auf dem Strahlengang von der Windschutzscheibe zur Bilderzeugungseinrichtung strahlendes Licht anderer Polarisation reflektiert.

Durch den reflektierenden Linear-Polarisator wird von dem von der Sonne durch die Windschutzscheibe in den Strahlengang zwischen Windschutzscheibe und Bilderzeugungseinrichtung eingestrahlten Licht der nicht der Polarisationsrichtung des reflektierenden Polarisators entsprechenden Polarisationsrichtung reflektiert und kann nicht zu einer Erwärmung der Bilderzeugungseinrichtung führen.

Zum Schutz gegen äußere Einflüsse sind die Bilderzeugungseinrichtung und die Abbildungsoptik innerhalb einer Hutze angeordnet, die eine von einer lichtdurchlässigen Abdeckscheibe verschlossene Öffnung aufweist, durch die das Strahlenbündel der Bilderzeugungseinrichtung zur Windschutzscheibe gelangt.

Auf oder in der Abdeckscheibe ist der reflektierende Polarisator angeordnet.

Dabei ist montagevereinfachend keine separate Montage von Abdeckscheibe und reflektierendem Polarisator erforderlich.

Diese Ausbildung führt zu hohen Transmissionswerten und damit zu einem Head-up-Display großer Leistungsfähigkeit.

Ist die Bilderzeugungseinrichtung eine Flüssigkristallanzeige, die von einer Lichtquelle durchleuchtbar ist und lichteingangsseitig einen polarisierenden Polarisator trägt, so wird ein Klären der Flüssigkristallanzeige, durch die kein Bild mehr dargestellt wird, vermieden.

Ein Ausführungsbeispiel der Erfindung ist in der Zeichnung dargestellt und wird im Folgenden näher beschrieben. Es zeigt:

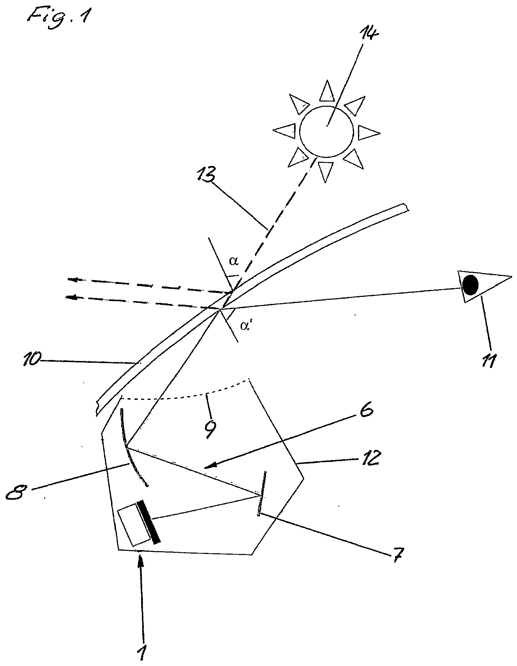

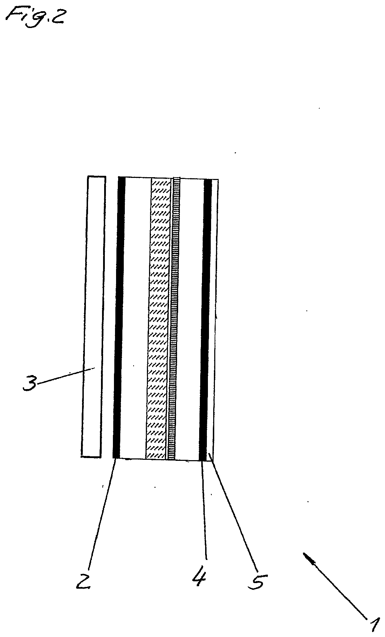

- Figur 1: eine Prinzipdarstellung eines Head-up-Displays,

Eine Flüssigkristallanzeige 1, die eine TFT-Flüssigkristallanzeige ist, weist auf ihrer Rückseite einen ersten Polarisator auf, durch den das Licht einer Lichtquelle linear polarisiert in die Flüssigkristallanzeige 1 eintritt.

Lichtausgangsseitig ist auf der Flüssigkristallanzeige 1 ein linearer s-polarisierender zweiter Polarisator angeordnet. Ein reflektierender Linear-Polarisator gleicher Polarisation wie der zweite Polarisator ist auf einer Abdeckscheibe 9 angeordnet.

Das aus der Flüssigkristallanzeige 1 austretende Strahlenbündel eines Bildes besteht also aus s-polarisiertem Licht.

Dieses Strahlenbündel wird in einem Strahlengang 6 über einen Spiegel 7 und einen aspherischen Spiegel 7' aufweisende Abbildungsoptik 8 sowie eine transparente Abdeckscheibe 9 auf eine Windschutzscheibe 10 eines Kraftfahrzeugs geleitet und dieser zu dem Bereich der Augen 11 eines Fahrers des Kraftfahrzeugs gespiegelt.

Die Abdeckscheibe 9 verschließt eine unterhalb der Windschutzscheibe 10 befindliche Hutze 12, in der die Flüssigkristallanzeige 1, die Lichtquelle, die Spiegel 7, 7' und die Abbildungsoptik 8 angeordnet sind.

Durch die Neigung der Windschutzscheibe 10 erfolgt die Umlenkung des Strahlenbündels an der Windschutzscheibe 10 um einen Winkel zwischen 110° und 140°.

Dies bedeutet, dass dieser Umlenkwinkel einen Brewster-Winkel α' von etwa 60° entspricht.

Trifft die Strahlung 13 der Sonne 14 von außen unter einem dem Brewster-Winkel α nahen Winkel auf die Windschutzscheibe 10, wird dieses Sonnenlicht durch die Windschutzscheibe 10 zum Teil polarisiert.

Aufgrund des Brewster-Winkels hat das Sonnenlicht nach der Windschutzscheibe 10 einen größeren p-polarisierten Anteil als s-polarisierten Anteil. Dieser p-polarisierte Anteil wird durch den reflektierenden Polarisator besonders gut von der Flüssigkristallanzeige 1 abgehalten und kann somit diese nicht erwärmen.

Der p-polarisierte Anteil beträgt etwa 70 %, während der s-polarisierte Anteil nur etwa 30 % beträgt.

Da also nur der 30 %ige s-polarisierte Anteil des Sonnenlichts entgegen dem Strahlengang 6 zur Flüssigkristallanzeige 1 gelangen und zu einer Erwärmung der Flüssigkristallanzeige 1 führen kann, ist diese Erwärmung derart gering, dass sie zu keiner Beeinträchtigung der Funktion der Flüssigkristallanzeige 1 führt.

Dies bedeutet, dass dieser Umlenkwinkel einen Brewster-Winkel α' von etwa 60° entspricht.

Trifft die Strahlung 13 der Sonne 14 von außen unter einem dem Brewster-Winkel α nahen Winkel auf die Windschutzscheibe 10, wird dieses Sonnenlicht durch die Windschutzscheibe 10 zum Teil polarisiert.

Aufgrund des Brewster-Winkels hat das Sonnenlicht nach der Windschutzscheibe 10 einen größeren p-polarisierten Anteil als s-polarisierten Anteil. Dieser p-polarisierte Anteil wird durch den reflektierenden Polarisator 5 besonders gut von der Flüssigkristallanzeige 1 abgehalten und kann somit diese nicht erwärmen.

Der p-polarisierte Anteil beträgt etwa 70 %, während der s-polarisierte Anteil nur etwa 30 % beträgt.

Da also nur der 30 %ige s-polarisierte Anteil des Sonnenlichts entgegen dem Strahlengang 6 zur Flüssigkristallanzeige 1 gelangen und zu einer Erwärmung der Flüssigkristallanzeige 1 führen kann, ist diese Erwärmung derart gering, dass sie zu keiner Beeinträchtigung der Funktion der Flüssigkristallanzeige 1 führt.

## Patentansprüche

1. Head-up-Display für ein Kraftfahrzeug, mit einer Bilderzeugungseinrichtung (1), einem lichtausgangsseitig auf der Bilderzeugungseinrichtung angeordneten Polarisator, einer Abbildungsoptik und einem reflektierenden Linear-Polarisator, wobei von der Bilderzeugungseinrichtung Strahlenbündel eines Bildes durch den lichtausgangsseitig auf der Bilderzeugungseinrichtung angeordneten Polarisator linear s-polarisiert über eine Abbildungsoptik zu einer Windschutzscheibe (10) des Kraftfahrzeugs geleitet und von der Windschutzscheibe (10) in Richtung eines Fahrers (11) des Kraftfahrzeugs gelenkt werden, wobei der reflektierende Linear-Polarisator im Strahlengang (6) des Strahlenbündels zwischen der Bilderzeugungseinrichtung und der Windschutzscheibe (10) angeordnet ist, und wobei dessen Polarisationsrichtung der Polarisationsrichtung des von der Bilderzeugungseinrichtung ausgestrahlten Strahlenbündels entspricht und wobei der Linear-Polarisator auf dem Strahlengang (6) von der Windschutzscheibe (10) zur Bilderzeugungseinrichtung strahlendes Licht anderer Polarisation reflektiert, **dadurch gekennzeichnet, dass** die Bilderzeugungseinrichtung und die Abbildungsoptik innerhalb einer Hutze angeordnet sind, die eine von einer lichtdurchlässigen Abdeckscheibe verschlossene Öffnung aufweist, durch die das Strahlenbündel der Bilderzeugungseinrichtung zur Windschutzscheibe (10) gelangt, wobei auf oder in der Abdeckscheibe der reflektierende Polarisator angeordnet ist.

2. Head-up-Display nach Anspruch 1, **dadurch gekennzeichnet, dass** die Bilderzeugungseinrichtung eine Flüssigkristallanzeige (1) ist, die von einer Lichtquelle durchleuchtbar ist und lichteingangsseitig einen p-polarisierenden Polarisator trägt.

## Claims

1. Head-up display for a motor vehicle, comprising an image generating device (1), a polarizer arranged on the light-exit side on the image generating device, an imaging optical unit and a reflective linear polarizer, wherein beams of an image are guided, linearly s-polarized by the polarizer arranged on the light-exit side on the image generating device, via an imaging optical unit from the image generating device to a windscreen (10) of the motor vehicle, and are directed from the windscreen (10) in the direction of a driver (11) of the motor vehicle, wherein the reflective linear polarizer is arranged in the beam path (6) of the beam between the image generating device and the windscreen (10), and wherein the polarization direction of said polarizer corresponds to the polarization direction of the beam emitted by the image generating device and wherein the linear polarizer reflects light of a different polarization that travels along the beam path (6) from the windscreen (10) to the image generating device,
**characterized in that**
the image generating device and the imaging optical unit are arranged within a binnacle, which has an opening which is closed by a light-transmissive cover panel and through which the beam from the image generating device passes to the windscreen (10), wherein the reflective polarizer is arranged on or in the cover panel.

2. Head-up display according to Claim 1, **characterized in that** the image generating device is a liquid-crystal display (1), through which a light source is able to shine and which, on the light-entrance side, carries a p-polarizing polarizer.

## Revendications

1. Affichage tête haute pour un véhicule automobile, comprenant un dispositif (1) de formation d'image, un polariseur agencé sur le dispositif de formation d'images du côté de la sortie de la lumière, une optique de représentation et un polariseur linéaire réfléchissant, un faisceau de rayons d'une image étant guidés par le dispositif de formation d'images à travers le polariseur agencé du côté de la sortie de lumière sur le dispositif de formation d'image, polarisés linéairement en s, par l'intermédiaire d'une optique de représentation, vers un pare-brise (10) du véhicule automobile et étant dirigés par le pare-brise (10) en direction d'un conducteur (11) du véhicule automobile, le polariseur linéaire réfléchissant étant agencé sur le trajet (6) du faisceau de rayons entre le dispositif de formation d'images et le pare-brise (10), et sa direction de polarisation correspondant à la direction de polarisation du faisceau de rayons émis par le dispositif de formation d'image, et le polariseur linéaire réfléchissant sur le trajet (6) du faisceau de rayons, du pare-brise (10) au dispositif de formation d'image, une lumière rayonnant avec une autre polarisation,
**caractérisé en ce que**
le dispositif de formation d'images et l'optique de reproduction sont agencés à l'intérieur d'une hotte qui présente une ouverture fermée par une plaque de recouvrement transparente à la lumière, à travers laquelle le faisceau de rayons du dispositif de formation d'images parvient au pare-brise (10), le polariseur réfléchissant étant agencé sur ou dans la plaque de recouvrement.

2. Affichage tête haute selon la revendication 1, **caractérisé en ce que** le dispositif de génération d'images est un affichage à cristaux liquides (1) qui est apte à être éclairé par une source lumineuse et qui porte un polariseur à polarisation p du côté de l'entrée de lumière.
